# EUROPÄISCHE PATENTSCHRIFT

(11) **EP 1 745 969 B1**
(45) Veröffentlichungstag und Bekanntmachung des Hinweises auf die Patenterteilung: **26.03.2008**
(21) Anmeldenummer: 06009290.5
(22) Anmeldetag: 05.05.2006
(51) Int. Cl.: B60K 13/04, F01N 7/18

(54) **Fahrzeug mit einer Einrichtung zur gekoppelten Befestigung einer Abgasanlage mit einer Brennkraftmaschine**
Vehicle with a device for coupling an exhaust system and an internal combustion engine
Véhicule avec dispositif pour coupler un système d'échappement et un moteur à combustion interne

(30) Priorität: 22.07.2005 DE 102005034261
(43) Veröffentlichungstag der Anmeldung: 24.01.2007
(73) Patentinhaber: Dr.Ing. h.c. F. Porsche Aktiengesellschaft, 70435 Stuttgart (DE)
(72) Erfinder: Kappich, Joachim, 75378 Bad Liebenzell (DE); Wessels, Michael, 74321 Bietigheim-Bissingen (DE); Vöhringer, Rouven, 71272 Renningen (DE)

(56) Entgegenhaltungen:
- DE-C1- 4 032 431
- DE-U1- 8 633 380

## Beschreibung

Die Erfindung bezieht sich auf ein Fahrzeug mit einer Einrichtung zur gekoppelten Befestigung einer Abgasanlage mit einer Brennkraftmaschine nach dem Oberbegriff des Anspruchs 1.

Ein Problem bei Brennkraftmaschinen im Leerlauf sind die sich ausbildenden Schwingungen des Antriebsaggregats, welche zu Gesamtaggregatschwingungen bei kritischen Motordrehzahlen führen und ein Leerlaufschwingungsverhalten des Antriebsaggregats ungünstig beeinflussen. Aus der DE 40 32 431 C1 ist eine Aufhängevorrichtung für eine Abgasanlage eines Kraftfahrzeugs bekannt, bei der die Abgasrohre über Halter mit einem Aufnahmeteil verbunden sind, welches an einem Getriebe befestigt ist. Das Aufnahmeteil umfasst ein gummielastisches Halteteil, mit dem jeweils die Abgasrohre verbunden sind und somit die Abgasrohre bei in die Abgasanlage eingeleiteten Vibrationsschwingungen in seitliche Richtung optimal geführt werden.

Aufgabe der Erfindung ist es, eine Einrichtung für ein Antriebsaggregat bzw. für eine Brennkraftmaschine zu schaffen, welche die Gesamtgierschwingungen aus einem kritischen Motordrehzahlbereich in einen nicht kritischen niedrigen Motordrehzahlbereich verschiebt.

Diese Aufgabe wird erfindungsgemäß durch die Merkmale des Anspruchs 1 gelöst. Weitere vorteilhafte Merkmale bilden die Unteransprüche.

Die mit der Erfindung hauptsächlich erzielten Vorteile bestehen darin, dass durch die erfindungsgemäße Fahrzeug eine derartige schwingungstechnische Abstimmung des Antriebsaggregats erfolgt, bei der die Gesamtaggregate Gierschwingungen zu einer niedrigeren Motordrehzahl verschoben werden und sich somit ein verbessertes Leerlaufschwingungsverhalten des Antriebsaggregats bzw. der Brennkraftmaschine ergibt. Dies wird erreicht, indem mit einer Stirnseite des Antriebsaggregats bzw. der Brennkraftmaschine eine in einer Querebene des Fahrzeugs gehaltene Pendelstütze um eine horizontal angeordnete und in Fahrzeuglängsrichtung ausgerichtete Schwenkachse angelenkt ist. Die Pendelstütze weist an gegenüberstehenden divergierenden Tragarmen zueinander beabstandete Halterungen für Abgasrohre der Abgasanlage auf, die jeweils in einem Abgasstrang zwischen dem Abgasschalldämpfer und dem Katalysator angeordnet sind und die Abgasschalldämpfer mit der Brennkraftmaschine über wenigstens einen Halter mit der Brennkraftmaschine verbunden werden. Die Pendelstütze besteht nach der Erfindung aus einem dreieckförmigen Tragteil, das an freien Enden seiner Tragarme Halteschellen bzw. Halterungen für die Abgasrohre aufweist und im oberen zusammengeführten Bereich der beiden Tragarme ist ein Lager für die horizontale Schwenkachse der Pendelstütze am Tragteil angeordnet. Hierdurch wird erreicht, dass die Einrichtung einerseits mit dem Antriebsaggregat fest verbunden ist und somit auch die Schwingbewegungen im Leerlauf mit durchführt, andererseits aber eine Entkopplung zum Antriebsaggregat um die horizontal und in Längsrichtung des Aggregats ausgerichtete Schwenkachse aufweist, so dass die Einrichtung entgegen der Bewegungen des Antriebsaggregats gerichtete Bewegungen mit den Abgasschalldämpfern und den Katalysatoren durchführen kann.

Des Weiteren ist nach der Erfindung vorgesehen, dass die Pendelstütze an einem Traggestell gelagert ist, dass mit einem querverlaufenden am Fahrzeugaufbau abgestützten Lagerschwert der Brennkraftmaschine verbunden ist. Die Halterungen für die Abgasrohre sind des Weiteren nach der Erfindung koaxial zueinander angeordnet und stehen im Abstand vor der Pendelstütze. Durch die feste Anbindung der Abgasrohre an die Pendelstütze sowie deren Bewegung um die horizontale Lagerachse sowie durch die feste Verbindung mit dem Antriebsaggregat ergibt sich eine zwangsgeführte Bewegung der Abgasstränge und somit der hiermit verbundenen Abgasschalldämpfer sowie der Katalysatoren, die mit ihrem Gewicht den Schwingbewegungen des Antriebsaggregats im Leerlauf entgegenwirken können und die Giermode reduziert wird und eine Leerlaufberuhigung erreichbar ist.

Die jeweils von den Halterungen der Pendelstütze fest umgriffenen Abgasrohre der Abgasstränge treten in einem unteren Bereich des Topfes des Abschalldämpfers in diesen ein und die Abgasschalldämpfer erstrecken sich vom Eintrittsbereich der Abgasrohre vertikal nach oben und oberhalb der Halterung ist der Schwerpunkt des Abgasschalldämpfers angeordnet. Durch diese besondere Anordnung des Abgasschalldämpfers bzw. der Abgasschalldämpfer wird die Wirkung der Leerlaufberuhigung bzw. der Leerlaufschwingungen unterstützt.

Die Brennkraftmaschine bzw. das Antriebsaggregat insgesamt ist im Leerlaufzustand in seinen Lagerungen um eine vertikale Hochachse schwingend gelagert und die Pendelstütze schwingt entgegen der Schwenkbewegung des Antriebsaggregats bzw. der Brennkraftmaschine um die horizontale Lagerachse. Die Abgasschalldämpfer wirken der Schwingbewegung des Antriebsaggregats bzw. des Motors um die Hochachse im Leerlauf entgegen. Insbesondere ist die Pendelstütze mit dem Antriebsaggregat bzw. dem Motor gekoppelt und über die horizontale Lagerachse zu diesem entkoppelt verschwenkbar und um die Hochachse mit bewegbar, derart, dass die mit der Pendelstütze über die Halterungen verbundenen Abgasrohre der beiden Abgasstränge eine auf die beiden Abgasschalldämpfer sowie auf die Katalysatoren einwirkende Bewegung den Schwenkbewegungen des Antriebsaggregats bzw. des Motors im Leerlauf entgegengerichtet sind. Dadurch, dass die beiden Katalysatoren über die Pendelstütze miteinander verbunden sind und diese schwenkbar am Motor bzw. am Antriebsaggregat verbunden werden, ergibt sich für die Katalysatoren durch die schwenkbare Anordnung nur eine geringe Steifigkeit in vertikaler Richtung und somit schwingen die Endschalldämpfer bei Leerlaufdrehzahl dem Antriebsaggregat entgegen. Dabei werden über die schwenkbare Befestigung der Pendelstütze Kräfte in Querrichtung auf das Antriebsaggregat übertragen.

Ein Ausführungsbeispiel der Erfindung ist in den Zeichnungen dargestellt und wird im Folgenden näher beschrieben.
Es zeigen
- Fig. 1: eine Ansicht auf eine Abgasanlage mit Abgasschalldämpfer und Katalysatoren sowie angedeuteter Einrichtung, mit Pendelstütze,
- Fig. 2: eine vergrößerte Darstellung der von der Pendelstütze gehaltenen Abgasrohre der beiden Abgasstränge,
- Fig. 3: eine Ansicht auf die Einrichtung, bestehend aus der schwenkbar an einem Traggestell angeordneten Pendelstütze,
- Fig. 4: eine schaubildliche Darstellung auf die vom Motor bzw. einem Lagerschwert des Motors gehaltenen Einrichtung,
- Fig. 5, 6: Diagramme über die ursprüngliche und über die abgesenkten Schwingungen bei einer gleichen Leerlaufdrehzahl des Motors und
- Fig. 7: eine Computerdarstellung einer Simulation der Bewegung der Pendelstütze infolge der Schwingungsbewegung des Motors bzw. Antriebsaggregats mit Bewegungsabfolge der beiden Abgasschalldämpfer.

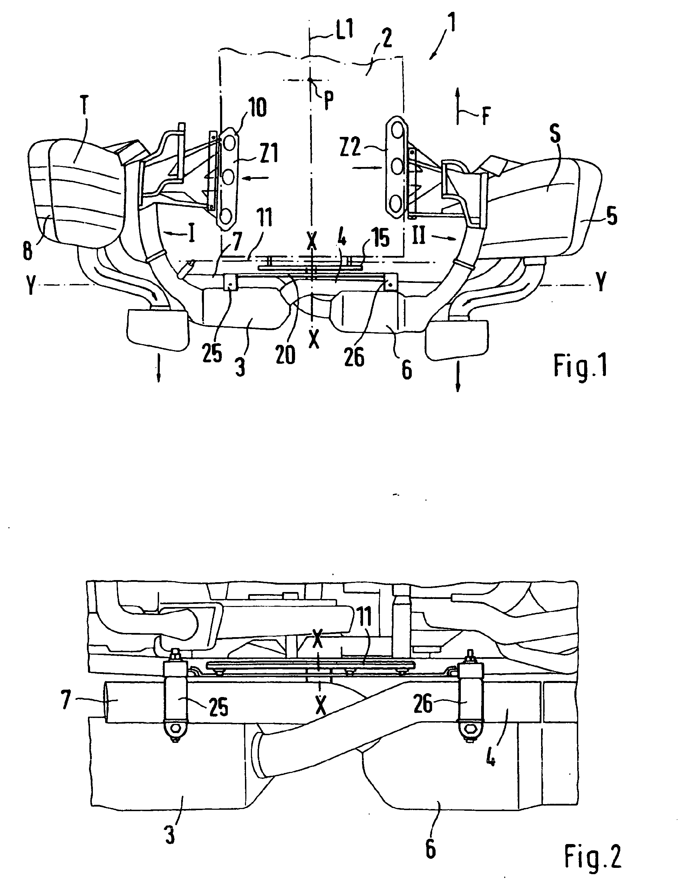

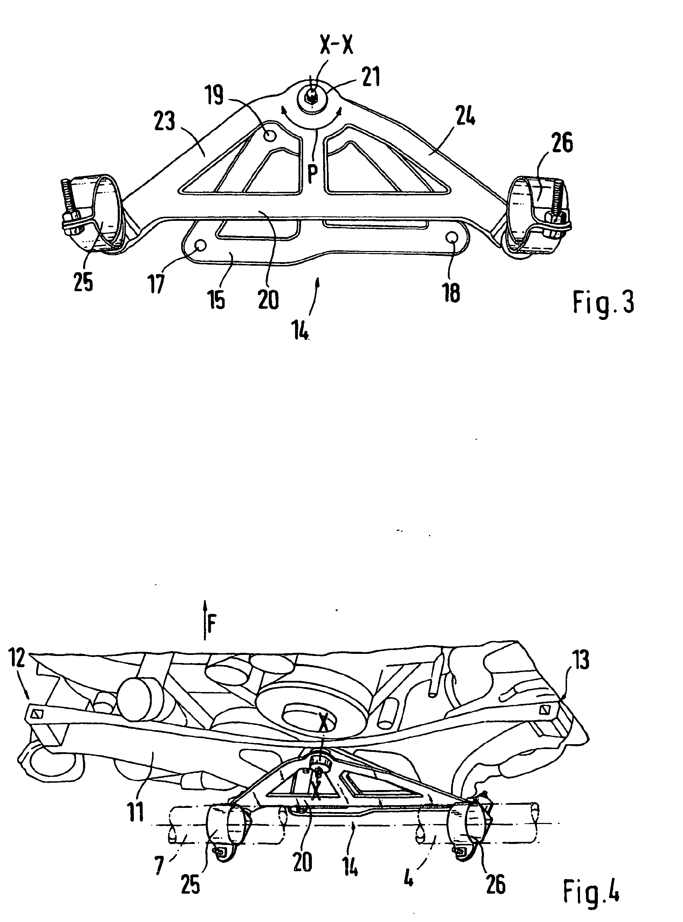

Wie in Fig. 1 i.V.m. Fig. 2 näher zu erkennen ist, umfasst eine Abgasanlage 1 für ein Kraftfahrzeug zwei Abgasstränge I und II. Der erste Abgasstrang I führt von der einen Zylinderseite Z1 des Motors 2 über einen Katalysator 3, einem Abgasrohr 4 in einen Abgasschalldämpfer 5 und von diesem wird der Abgasstrom nach außen geführt. Entsprechend ist auch der zweite Abgasstrang II ausgeführt, der von der weiteren Zylinderseite Z2 zum Katalysator 6 und über das Abgasrohr 7 zum weiteren Abgasschalldämpfer 8 führt und von diesem wird der weitere Abgasstrom ebenfalls nach außen abgeführt. Die Abgasschalldämpfer 5, 8 sind seitlich des Motors bzw. des Antriebsaggregats 2, welches auch ein Getriebe (nicht dargestellt) mit umfassen kann, ausgerichtet und mittels Halter 10 am Motor 2 befestigt. Die Halter 10 sind am unteren Ende des Abgasschalldämpfers, 5, 8 angeordnet und diese erstrecken sich von den Haltern 10 nach oben hin. Die Abgasrohre 4, 7 münden im unteren Bereich des Topfes T der Abgasschalldämpfer 5, 8 in diese ein. Die Antriebseinheit 2 bzw. der Motor ist über mehrere Lagerungen mit dem Fahrzeugaufbau verbunden. Eine hintere Lagerung - in Bezug auf die Fahrtrichtung F des Fahrzeugs gesehen - erfolgt über ein sogenanntes Lagerschwert 11 (Fig. 4), das endseitig bei 12 und 13 am Fahrzeugaufbau abgestützt ist. Mit diesem Lagerschwert 11 ist der Motor 2 stirnseitig fest verbunden, was in Fig. 4 zu erkennen ist.

Am Lagerschwert 11 ist eine Einrichtung 14 zur gekoppelten Befestigung der Abgasanlage 1 gehalten, die wie vorstehend ausgeführt wurde, ausgebildet ist. Diese Einrichtung 14 umfasst im Wesentlichen ein mit dem Lagerschwert 11 verbundenes Traggestell 15, das über Befestigungsmittel beispielsweise bei 17, 18 und 19 mit dem Lagerschwert 11 fest verbunden ist. Am Traggestell 15 ist eine Pendelstütze 20 auf einem Lager 21 gehalten, derart, dass die Pendelstütze 20 eine Schwenkbewegung um eine horizontale und in Fahrzeuglängsrichtung L1 des Fahrzeugs verlaufende Achse X-X durchführen kann, was in den Fig. 1 bis 4 näher gezeigt ist.

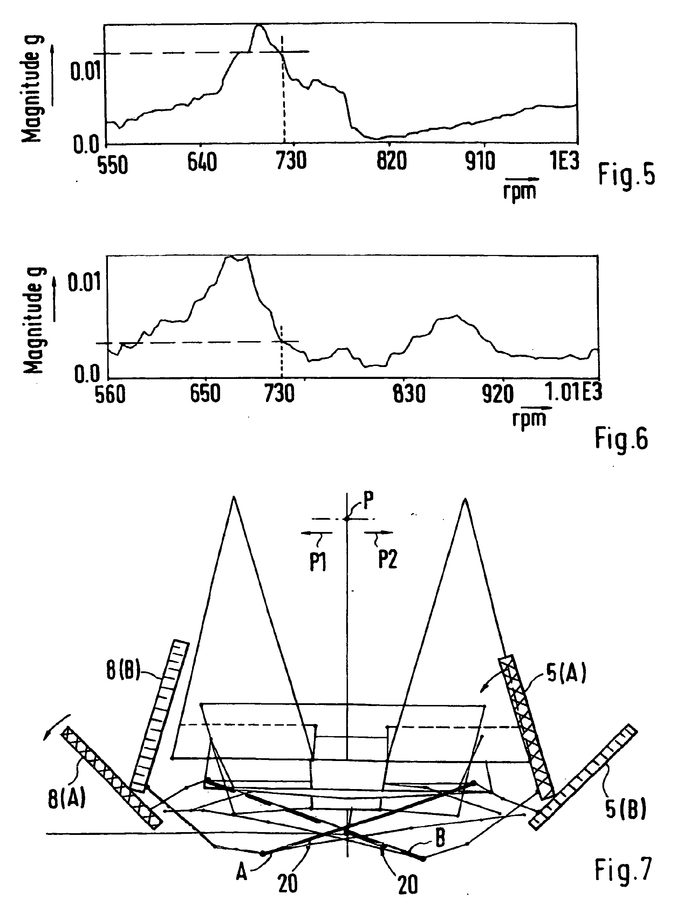

Die Pendelstütze 20 besteht aus einem dreieckförmigen ebenen Traggestell mit divergierenden Tragarmen 23, 24, die an ihren freien Enden jeweils eine Halteschelle bzw. eine Halterung 25, 26 aufweisen, in welchen die Abgasrohre 4, 7 festgehalten sind. Somit ist einerseits die Einrichtung 14 fest mit dem Antriebsaggregat 2 bzw. dem Motor in seinen Bewegungen abhängig von der Motorbewegung im Leerlauf um eine vertikale Hochachse P (Fig. 2) und andererseits kann die Pendelstütze 20 eine Eigenbewegung um die horizontale Schwenkachse X-X durchführen. Das heißt, bei einer Schwenkbewegung des Motors 2 um die Hochachse P, das heißt, um eine etwa vertikal ausgerichtete Achse, wird sich die Pendelstütze 20 in Längsrichtung des Motors 2 geringfügig verschränken und in Querrichtung des Motors Auslenkbewegungen durchführen, was in Fig. 7 dargestellt ist.

In dieser Fig. 7 sind solche Bewegungen der Pendelstütze 20 als Simulationsbild schematisch dargestellt. Bei einer Schwingbewegung des Motors 2 um die vertikale Hochachse P in Pfeilrichtung P1 stellt sich die Pendelstütze 20 in die Position A ein, und die Abgasschalldämpfer 8 (A) und 5 (A) bewirken eine gegengerichtete Kraft zum Motor 2. Entsprechend wird durch eine Schwingbewegung des Motors 2 in Pfeilrichtung P2 bewirkt, dass die Pendelstütze 20 die Position B einnimmt und die Abgasschalldämpfer 5 (B) und 8 (B) stellen sich der Schwingbewegung des Motors 2 entgegen. Durch die feste Verbindung der Pendelstützen 20 mit den Abgasrohren 4, 7 wirken auch die Katalysatoren 3, 6 als sogenannte Gegenmasse zum Motor 2.

In den Diagrammen Fig. 5 und 6 sind die Verlagerungen bzw. die Absenkungen der Gierschwingungen des Motors 2 beispielsweise bei der Drehzahl 720rpm auf einen Wert von ursprünglich über 16mg auf wesentlich unterhalb des Wertes von 4mg gezeigt, so dass sich durch die Einrichtung 14 ein deutlich besseres Leerlaufschwingungsverhalten des Motors bzw. des Antriebsaggregats 2 ergibt.

## Patentansprüche

1. Fahrzeug mit einer Einrichtung zur gekoppelten Befestigung einer Abgasanlage (1) mit einer Brennkraftmaschine (2) oder einem Antriebsaggregat zur Verbesserung eines Leerlaufschwingungsverhaltens, wobei die Abgasanlage (1) jeweils einen mit jeder Zylinderseite (Z1 und Z2) des Motors (2) verbundenen Abgasstrang (I, II) mit einem Katalysator (3, 6) und einem stromab nachgeordnetem Abgasschalldämpfer (S, T) umfasst, **dadurch gekennzeichnet, dass** mit einer Stirnseite der Brennkraftmaschine (2) ein in einer Querebene (Y-Y) des Fahrzeugs gehaltene Pendelstütze (20) um eine horizontal angeordnete und in Fahrzeuglängsrichtung (L1) ausgerichtete Schwenkachse (X-X) angelenkt ist und die Pendelstütze (20) an gegenüberstehenden divergierenden Tragarmen (23, 24) zueinander beabstandete Halterungen (25, 26) für Abgasrohre (7, 4) der Abgasanlage (1) aufweist und die Halterungen (25, 26) jeweils in einem Abgasstrang (I, II) zwischen dem Abgasschalldämpfer (8, 5) und dem Katalysator (3, 6) angeordnet sind und die Abgasschalldämpfer (8, 5) der Brennkraftmaschine (2) über wenigstens einen Halter (10) mit der Brennkraftmaschine (2) verbunden sind.

2. Fahrzeug nach Anspruch 1, **dadurch gekennzeichnet, dass** die Pendelstütze (20) ein dreieckförmiges Tragteil umfasst, das an freien Enden seiner Tragarme (23, 24) die Halteschellen oder Halterungen (25, 26) für die Abgasrohre (7, 4) aufweist und im oberen zusammengeführten Bereich der beiden Tragarme (23, 24) ein Lager (21) für die horizontale Schwenkachse (X-X) der Pendelstütze (20) angeordnet ist.

3. Fahrzeug nach den Ansprüchen 1 oder 2, **dadurch gekennzeichnet, dass** die Pendelstütze (20) an einem Traggestell (15) gelagert ist, das mit einem querverlaufenden am Fahrzeugaufbau abgestützten Lagerschwert (11) der Brennkraftmaschine (2) verbunden ist.

4. Fahrzeug nach den Ansprüchen 1, 2 oder 3, **dadurch gekennzeichnet, dass** die Halterungen (25, 26) für die Abgasrohre (7, 4) koaxial zueinander und in einem Abstand vor der Pendelstütze (20) angeordnet sind.

5. Fahrzeug nach einem der vorhergehenden Ansprüche, **dadurch gekennzeichnet, dass** jeweils die von den Halterungen (25, 26) der Pendelstütze (20) fest umgriffenen Abgasrohre (7, 4) der Abgasstränge (I, II) in einem unteren Bereich des Topfes (T) des Abgasschalldämpfers (8, 5) eintritt und der Abgasschalldämpfer (8, 5) sich jeweils vom Eintrittsbereich der Abgasrohre (7, 4) vertikal hoch erstreckt und oberhalb der Halterungen (25, 26) mit seinem Schwerpunkt (S) angeordnet ist.

6. Fahrzeug nach einem der vorhergehenden Ansprüche, **dadurch gekennzeichnet, dass** die Brennkraftmaschine (2) oder das Antriebsaggregat insgesamt im Leerlaufzustand in seinen Lagerungen um eine vertikale Hochachse (P) schwingend gelagert ist und die Pendelstütze (20) der Schwingbewegung des Antriebsaggregats bzw. der Brennkraftmaschine (2) um die horizontale Schwenkachse (X-X) entgegen schwingend ausgeführt ist, wobei die Abgasschalldämpfer (8, 5) der Schwingbewegung des Antriebsaggregats bzw. der Brennkraftmaschine (2) um die Hochachse (P) im Leerlauf entgegenwirkend bewegbar sind.

7. Fahrzeug nach einem der vorhergehenden Ansprüche, **dadurch gekennzeichnet, dass** die Pendelstütze (20) mit dem Antriebsaggregat bzw. der Brennkraftmaschine (2) gekoppelt und über die horizontale Lagerachse (X-X) zu diesem entkoppelt verschwenkbar ist und um die Hochachse (P) des Antriebsaggregats (2) mitschwingbar ist, derart, dass die mit der Pendelstütze (20) über die Halterungen (25, 26) verbundenen Abgasrohre (7, 4) der beiden Abgasstränge (I, II) eine auf die beiden Abgasschalldämpfer (8, 5) sowie auf die Katalysatoren (3, 6) einwirkende Bewegung den Schwingbewegungen des Antriebsaggregats bzw. der Brennkraftmaschine (2) im Leerlauf entgegengerichtet sind.

## Claims

1. Vehicle having a device for the coupled fastening of an exhaust system (1) to an internal combustion engine (2), or to a drive unit, for improving an idle vibration behaviour, with the exhaust system (1) comprising in each case one exhaust strand (I, II), which is connected to each cylinder side (Z1 and Z2) of the engine (2), with a catalytic converter (3, 6) and an exhaust silencer (S, T) arranged downstream, **characterized in that** a pendulum support (20) which is held in a transverse plane (Y-Y) of the vehicle is articulatedly connected to an end side of the internal combustion engine (2) about a horizontally arranged pivot axis (X-X) which is aligned in the vehicle longitudinal direction (L1), and the pendulum support (20) has, on opposite, divergent support arms (23, 24), spaced-apart holders (25, 26) for exhaust pipes (7, 4) of the exhaust system (1), and the holders (25, 26), in each case in one exhaust strand (I, II), are arranged between the exhaust silencer (8, 5) and the catalytic converter (3, 6), and the exhaust silencers (8, 5) of the internal combustion engine (2) are connected by means of at least one bracket (10) to the internal combustion engine (2).

2. Vehicle according to Claim 1, **characterized in that** the pendulum support (20) comprises a triangular support part which, at free ends of its support arms (23, 24), has the holding shells or holders (25, 26) for the exhaust pipes (7, 4), and a bearing (21) for the horizontal pivot axis (X-X) of the pendulum support (20) is arranged in the upper, joined-together region of the two support arms (23, 24).

3. Vehicle according to Claim 1 or 2, **characterized in that** the pendulum support (20) is mounted on a support frame (15) which is connected to a transversely-running bearing strut (11), which is supported on the vehicle body, of the internal combustion engine (2).

4. Vehicle according to Claim 1, 2 or 3, **characterized in that** the holders (25, 26) for the exhaust pipes (7, 4) are arranged coaxially with respect to one another and with a spacing in front of the pendulum support (20).

5. Vehicle according to one of the preceding claims, **characterized in that** the exhaust pipes (7, 4), which are fixedly grasped by the holders (25, 26) of the pendulum support (20), of the exhaust strands (I, II) enter in each case in a lower region of the pot (T) of the exhaust silencer (8, 5), and the exhaust silencer (8, 5) extends vertically upward in each case from the inlet region of the exhaust tubes (7, 4) and is arranged with its centre of gravity (S) above the holders (25, 26).

6. Vehicle according to one of the preceding claims, **characterized in that** the internal combustion engine (2) or the drive unit overall is mounted so as to vibrate in its mounts about a vertical axis (P) in the idle state, and the pendulum support (20) is designed so as to vibrate counter to the vibrating movement of the drive unit or of the internal combustion engine (2) about the horizontal pivot axis (X-X), with the exhaust silencers (8, 5) being movable so as to counteract the vibrating movement of the drive unit or of the internal combustion engine (2) about the vertical axis (P) at idle.

7. Vehicle according to one of the preceding claims, **characterized in that** the pendulum support (20) is coupled to the drive unit or to the internal combustion engine (2), and can pivot in a manner decoupled therefrom about the horizontal bearing axis (X-X) and can co-vibrate about the vertical axis (P) of the drive unit (2), in such a way that the exhaust pipes (7, 4), which are connected to the pendulum support (20) by means of the holders (25, 26), of the two exhaust strands (I, II), a movement which acts on the two exhaust silencers (8, 5) and on the catalytic converters (3, 6), oppose the vibrating movements of the drive unit or of the internal combustion engine (2) at idle.

## Revendications

1. Véhicule comprenant un dispositif pour la fixation par accouplement d'une installation de gaz d'échappement (1) avec un moteur à combustion interne (2) ou une unité d'entraînement, pour améliorer un comportement d'oscillation en marche à vide, l'installation de gaz d'échappement (1) comprenant à chaque fois une ligne d'échappement (I, II) connectée à chaque côté de cylindre (Z1 ou Z2) du moteur (2), avec un catalyseur (3, 6) et un silencieux de gaz d'échappement (S, T) placé en aval, **caractérisé en ce qu'**un support pendulaire (20) maintenu dans un plan transversal (Y-Y) du véhicule est articulé à un côté frontal du moteur à combustion interne (2) autour d'un axe de pivotement (X-X) disposé horizontalement et orienté dans la direction longitudinale du véhicule (L1), et le support pendulaire (20) présente, sur des bras de support (23, 24) divergents et opposés, des fixations espacées l'une de l'autre (25, 26) pour des tubes d'échappement (7, 4) de l'installation de gaz d'échappement (1), et les fixations (25, 26) sont disposées à chaque fois dans une ligne d'échappement (I, II) entre le silencieux d'échappement (8, 5) et le catalyseur (3, 6), et les silencieux d'échappement (8, 5) du moteur à combustion interne (2) sont connectés au moteur à combustion interne (2) par le biais d'au moins un support (10).

2. Véhicule selon la revendication 1, **caractérisé en ce que** le support pendulaire (20) comprend une partie de support triangulaire qui présente, aux extrémités libres de ses bras de support (23, 24), les coques de retenue ou les fixations (25, 26) pour les tubes d'échappement (7, 4), et **en ce qu'**un palier (21) pour l'axe de pivotement horizontal (X-X) du support pendulaire (20) est disposé dans la région assemblée supérieure des deux bras de support (23, 24).

3. Véhicule selon l'une quelconque des revendications 1 ou 2, **caractérisé en ce que** le support pendulaire (20) est monté sur un bâti de support (15) qui est connecté à une barre de palier (11) du moteur à combustion interne (2), supportée sur la carrosserie du véhicule et s'étendant transversalement.

4. Véhicule selon l'une quelconque des revendications 1, 2 ou 3, **caractérisé en ce que** les fixations (25, 26) pour les tubes d'échappement (7, 4) sont coaxiales l'une à l'autre et sont disposées à distance du support pendulaire (20).

5. Véhicule selon l'une quelconque des revendications précédentes, **caractérisé en ce que** les tubes d'échappement (7, 4) des lignes d'échappement (I, II) saisis fixement sur leur pourtour par les fixations (25, 26) du support pendulaire (20) entrent dans une région inférieure du pot (T) du silencieux d'échappement (8, 5) et le silencieux d'échappement (8, 5) s'étend verticalement vers le haut depuis la région d'entrée des tubes d'échappement (7, 4) et est disposé au-dessus des fixations (25, 26) avec son centre de gravité (S).

6. Véhicule selon l'une quelconque des revendications précédentes, **caractérisé en ce que** le moteur à combustion interne (2) ou l'unité d'entraînement est monté(e) dans l'ensemble dans l'état de marche à vide dans ses supports de palier de manière à osciller autour d'un axe vertical (P) et le support pendulaire (20) est réalisé de manière à osciller à l'encontre du mouvement d'oscillation de l'unité d'entraînement ou du moteur à combustion interne (2) autour de l'axe de pivotement horizontal (X-X), les silencieux d'échappement (8, 5) pouvant être déplacés à l'encontre du mouvement d'oscillation de l'unité d'entraînement ou du moteur à combustion interne (2) autour de l'axe vertical (P) en mode de marche à vide.

7. Véhicule selon l'une quelconque des revendications précédentes, **caractérisé en ce que** le support pendulaire (20) peut pivoter de manière accouplée à l'unité d'entraînement ou au moteur à combustion interne (2), ou de manière désaccouplée de celui-ci par le biais de l'axe de support horizontal (X-X), et peut être entraîné en oscillation autour de l'axe vertical (P) de l'unité d'entraînement (2), de telle sorte que les tubes d'échappement (7, 4) des deux lignes d'échappement (I, II), connectés au support pendulaire (20) par le biais des fixations (25, 26) soient animés d'un mouvement agissant sur les deux silencieux d'échappement (8, 5) ainsi que sur les catalyseurs (3, 6) s'opposant aux mouvements d'oscillation de l'unité d'entraînement ou du moteur à combustion interne (2) en mode de marche à vide.
